# EUROPEAN PATENT SPECIFICATION

(11) **EP 4 159 537 B1**
(45) Date of publication and mention of the grant of the patent: **04.03.2026**
(21) Application number: 22198377.8
(22) Date of filing: 28.09.2022
(51) Int. Cl.: B60N 3/04

(54) **CABIN FLOOR MAT**
KABINENBODENMATTE
TAPIS DE SOL POUR CABINE

(30) Priority: 30.09.2021 NL 2029291
(43) Date of publication of application: 05.04.2023
(73) Proprietor: DAF Trucks N.V., 5643 TW Eindhoven (NL)
(72) Inventor: PURDY, Stuart William, 5643 TW Eindhoven (NL); VAN GALEN, Haro, 5643 TW Eindhoven (NL)
(74) Representative: V.O.

(56) References cited:
- DE-A1- 102007 011 843
- DE-A1- 102010 045 968
- US-A- 2 650 855

## Description

### FIELD OF THE INVENTION

The invention relates to a mat for covering a cabin floor of a truck.

### BACKGROUND

For vehicles, such as trucks, operated e.g. in wet or snowy conditions, it can be difficult to prevent that dirt, mud, or water is brought into the cabin by a driver or passenger of the vehicle, e.g. coming off their boots or coats. For example in commercial applications, the driver may be loading or unloading the vehicle once or twice every hour, and may take up to 0.5 liter of water into the cabin each time. A contaminated cabin floor can be difficult to clean, while having a moist cabin floor can, in time, provide a breeding area for fungus and bacteria, which may cause unpleasant odours and affect the health of the driver and passenger.

Known vehicle mats, such as described in DE102007011843, can be used to cover the cabin floor. These mats, however, are typically not well suited for protecting a cabin floor against such large quantities of mud or water.

Accordingly, there remains a desire to address these and other drawbacks, to further advance the field of cabin floor mats, by providing a mat that directs fluids away from the cabin.

### SUMMARY

The stated problems are solved by the features of claim 1.

Aspects of the invention pertain to a mat for covering a cabin floor of a truck. The mat comprises a rear section, arranged for fixating the mat to the cabin floor, and a side section, arranged for extending along a door sill of the truck. The side section provides the mat with a declining surface having a lowest level beyond the door sill. The side section comprises a side wall having at least two mounting portions. Each mounting portion of the at least two mounting portions extends laterally for engaging with a bottom edge of the door sill, to fixate the side wall between the cabin floor and the door sill. Accordingly, by providing a declining top surface with a lowest level beyond the door sill, fluids such as (dirty) water coming off the driver's or passenger's coat or boots can be directed towards the lowest level, to prevent the fluids from stagnating in puddles. By having the side wall fixated between the door sill and the cabin floor, the mat can form a funnel that can drain away fluid from areas of the cabin directly to the gutter below the door sill, thereby preventing fluids to move around and spill into the cabin floor or other parts of the cabin and contaminate or damage the truck.

In some embodiments, each mounting portion of the at least two mounting portions can comprise a hook segment, arranged for hooking the mat to the bottom edge of the door sill. As such, the fixation between the side section and the door sill can be improved to ensure that the mat provides a declining top surface having a lowest level beyond the door sill.

To provide fixation between the side section and the door sill in a lateral direction, the hook segment can have a top surface provided with a recess for engaging with the bottom edge of the door sill. As such, the top surface declines to improve drainage of fluids, while allowing the mounting portions to engage with the door sill, e.g. by having the bottom edge of the door sill provided with cutouts.

To have the hook segment anchored to an interior side of the door sill, e.g. in the lateral direction and/or in the driving direction, the hook segment can extend, in plane of the mat, substantially at an angle to the driving direction of the truck, wherein the angle ranges between 30 - 60 degrees.

To reinforce the anchoring of the hook segment to the interior side of the door sill, the hook segment can comprise a distal edge, arranged for engaging with an internal structure of the door sill.

To prevent the mat from sliding along the driving direction of the truck, the hook segment can comprise, in plane of the mat, an outer contour having a contour width along the bottom edge of the door sill matching a cutout width of a cutout in the door sill.

In some embodiments, each mounting portion of the at least two mounting portions can comprise a connector for providing a snap-lock connection with a cutout in the door sill. The connector can anchor the mounting portion to the door sill, e.g. in the lateral direction and/or in the driving direction, while simultaneously aligning the mounting portion along the edge of the door sill, e.g. in the driving direction and in the vertical direction.

In other or further embodiments, the rear section can comprise a bottom surface provided with at least two pockets, arranged for fixating the rear section to protrusions extending from the cabin floor. As such, the mat can be fixated to the cabin floor while covering the protrusions, e.g. to further decrease the risk of a driver or passenger slipping or tripping in the cabin.

By having each pocket of the at least two pockets comprise an elastically deformable internal wall surface, for forming a press-fit around an external wall surface of a respective protrusion, the rear section can be fixated to the cabin floor without using additional fasteners, thereby decreasing the risk of a driver or passenger slipping or tripping.

In some embodiments, the rear section can comprise a flap extending from a rear portion of the rear section and extendible over an upstanding front wall of a frame portion, e.g. of a seat console. In this way, when extending over the front wall of the seat console, the mat can be arranged for covering an area of the cabin floor at least spanning from the seat to the door sill, e.g. to drain water from the cabin coming off the driver's or passenger's coat and/or boots.

In some embodiments, the mat comprises a top surface provided with an anti-slip coating, to reduce the risk of slipping for the driver or passenger.

By having the top surface further provided with grooves extending towards the side section, for directing the fluid to be drained towards and beyond the bottom edge of the door sill, the draining capacity of the mat can be improved, while the risk of slipping can be further reduced.

To improve manufacturability, maintenance and durability of the mat, at least the side section can be made of a polymer material.

In preferred embodiments, at least the side section can be an injection moulded part, e.g. to improve manufacturability.

Other aspects of the invention relate to a truck, comprising the mat described herein. The truck further comprises a frame portion and a cover, arranged for covering the frame portion, and configured to clamp the mat when extending over an upstanding front wall of the frame portion.

### BRIEF DESCRIPTION OF THE DRAWINGS

The invention will be further elucidated in the figures:
FIG 1 illustrates a mat for covering a cabin floor;
FIG 2 provides an exploded isometric top view of the mat;
FIG 3 provides an isometric view of another or further embodiment of the mat, in use;
FIG 4 provides a side view of an embodiment of a mounting portion of the mat;
FIG 5 provides a top view of further embodiments of mounting portions;
FIG 6 provides a bottom view of a rear section of the mat;
FIG 7 illustrates a side view of other or further embodiments of the rear section;
FIG 8 provides an isometric view of an example cabin of a truck.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

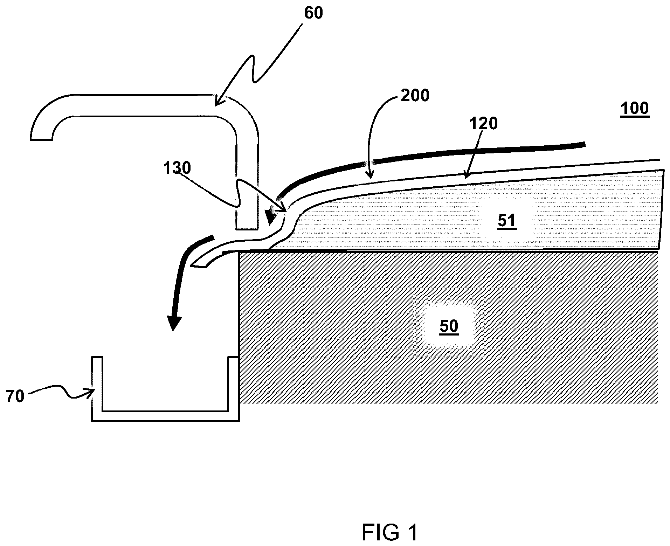

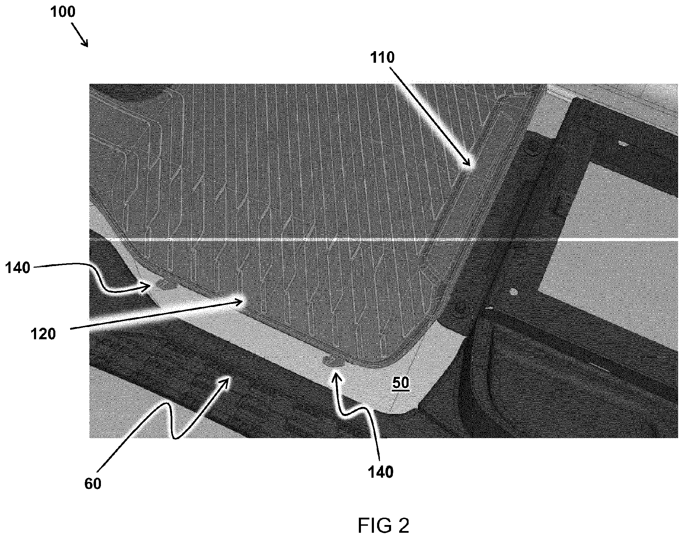

FIG 1 illustrates a side section 120 of a mat 100 (only schematically illustrated) for covering a cabin floor 50, e.g. of a truck. In the example, mat 100 is provided on a flexible subsurface 51 that can be compressed. The truck can for example be a heavy duty truck, e.g. used for industrial or construction applications, a transport truck, e.g. used for commercial distribution applications, or a box truck, e.g. used for private applications. Alternatively, the mat 100 can be used for covering a cabin floor of other types of vehicles, such as agricultural or industrial vehicles (e.g. tractors, harvesters, cranes, forklifts), passenger vehicles, trains, aircrafts, or vessels. As shown in FIG 2, the mat 100 comprises a rear section 110 and a side section 120. The rear section 110 is arranged for fixating the mat 100 to the cabin floor 50. For example, a bottom surface of the rear section 110 can be provided with fixation means, such as a press-fit or snap-fit arrangement, to engage with protrusions on the cabin floor 50, such that the top surface of the mat 100 remains free of irregularities, e.g. due to holes, hooks, or fasteners. The side section 120 is arranged for extending along a door sill 60 of the truck. The door sill 60 can e.g. be the upper threshold when entering or exiting the cabin of the truck.

As shown in FIG 1, the side section 120 provides the mat 100 with a declining top surface 200, which has a lowest level beyond the door sill 60. For example, the side section 120 can provide the mat 100 with a declining top surface 200 which, in use, extends from a highest level, e.g. from a center console area of the truck, from a seat area of the truck, and/or from the foot pedal area of the truck, to a lowest level beyond the door sill 60. The side section 120 further comprises a side wall 130 having at least two mounting portions 140, depicted in FIG 2. Each mounting portion 140 extends laterally from the side section 120 for engaging with a bottom edge 65 of the door sill 60. In this way, as FIG 1 illustrates, the side wall 130 can be fixated between the cabin floor 50 and the door sill 60. Accordingly, in use, the side wall 130 directs fluid to be drained, such as mud or water brought into the cabin by the driver or passenger, from the mat 100 to a gutter 70 provided below the door sill 60, e.g. to prevent the fluid from stagnating on the mat 100 or contaminating the cabin floor 50.

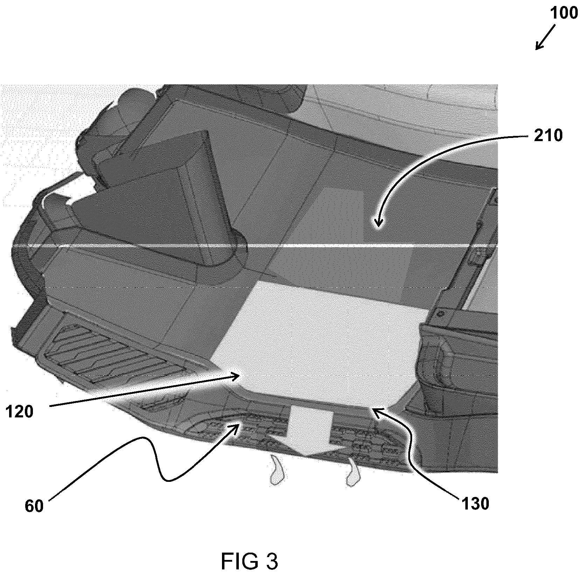

FIG 3 provides an isometric view of another or further embodiment the mat 100, in use, for example when applied for covering a cabin floor area in front of a driver's seat. While a mat 100 is designed with a side section 120 as herewith disclosed, the top surface may be any suitable material with some water resistance. The mat 100 may comprise a top surface 210 provided with an anti-slip coating, such as a coating comprising a rubber or thermoplastic polyolefin material, e.g. disposed in granular form on the top surface 210. Additionally, the top surface of the mat 100 can be provided with grooves extending towards the side section 120, for directing the fluid to be drained, such as water coming off the driver's boots or clothes, towards and beyond the bottom edge of the door sill 60. Also the top surface may be liner of a fibre material etc.

Preferably, to improve fixation strength between the mat and the door sill, at least the side section 120 of the mat 100 is made of a polymer material, such as a polyvinylchloride, nylon, or (hard) rubber material. Alternatively, or additionally, the side section 120 can comprise a metal, e.g. for reinforcing parts of the side section 120 such as the sidewall 130 and/or the mounting portions. Parts of the side section 120 can for example be fully or partially made of a metal or metal alloy, or comprise a metallic reinforcement structure such as a strut, mesh or filament structure. To improve manufacturability of the mat 100, at least the side section 120 can be an injection moulded part.

As shown in FIG 3, in use, the side wall 130 and the door sill 60 can form a funnel for directing fluid, such as water, from the mat 100 to a gutter below the door sill 60. Accordingly, in use, the mat 100 directs fluid from different sections of the mat 100 towards the lowest level provided by the mat 100 beyond the door sill 60 at which location it can be drained in a controlled way to the gutter, without contaminating or stagnating on the cabin floor.

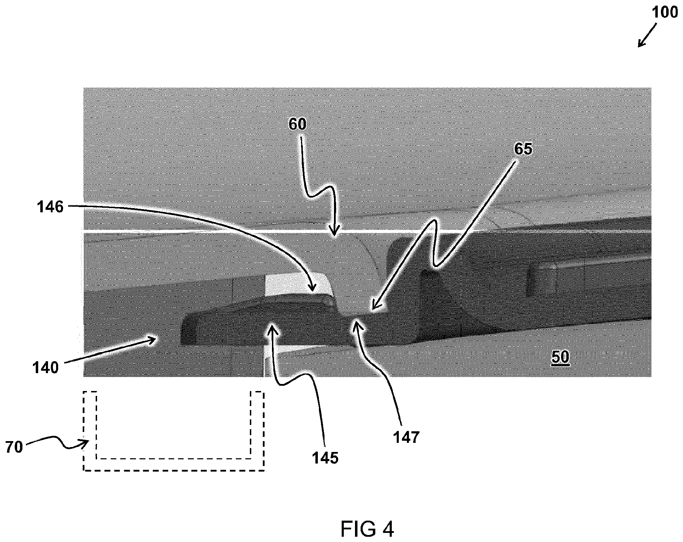

FIG 4 provides a side view of an embodiment of a mounting portion 140 of the mat 100. The mounting portion 140 can comprise a hook segment 145, arranged for hooking the mat 100 to the bottom edge 65 of the door sill 60, for example in a vertical direction. Alternatively, or additionally, the hook segment 145 can be arranged for hooking the mat 100 to a protrusion extending from the cabin floor 50, e.g. provided below or beyond the bottom edge 65 of the door sill 60.

As shown, the hook segment 145 can comprise a top surface 146 provided with a recess 147 for engaging with the bottom edge 65. A distal end of the hook segment 145 may further comprise a declining top surface 146, such that the top surface 146 has a declining slope from the bottom edge 65 to the distal end. Accordingly, the hook segment 145 forms a wedge that can be used for increasing the distance between the bottom edge 65 of the door sill 60 and the cabin floor 60 when mounting the mat 100, e.g. by compressing subsurface 51 (as depicted in Figure 1) or by raising the bottom edge 65 of the door sill 60. As a result, a clamping force can be applied on the mounting portion 140, e.g. in the vertical direction, by the door sill 60 when the bottom edge 65 engages with the recess 147.

When the hook segment 145 is alternatively or additionally arranged for hooking the mat 100 to a protrusion provided on the cabin floor 50, the hook segment can e.g. comprise a bottom surface provided with a recess for engaging with the protrusion, and/or a declining slope from the protrusion to the distal end.

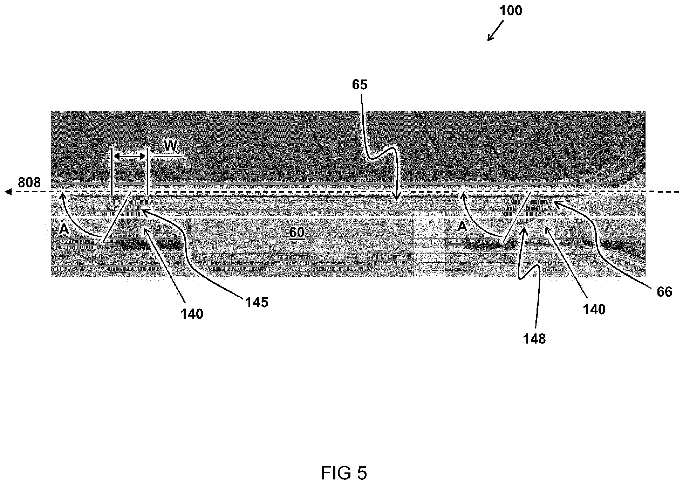

FIG 5 provides a top view of further embodiments of mounting portions 140. In plane of the mat 100, the hook segments 145 may extend substantially at an angle A to the (forward) driving direction 808 of the truck. Preferably, the angle A ranges between 30 - 60 degrees, such that the mounting portions 140 are inclined towards the forward driving direction 808 while anchoring the mat 100 in a lateral direction perpendicular to direction 808. As such, the mounting portions 140 can be arranged for anchoring the mat 100 along direction 808, such that the mat 100 does not slip when a force is applied on the mat 100 in this direction, e.g. during driving, braking, and e.g. during on or off boarding the vehicle.

As shown, the hook segment 145 may further comprise a distal edge 148, arranged for engaging with an internal structure of the door sill 60, such as an internal wall or cross beam. As such, a secondary means can be provided for anchoring the mat to the door sill 60, e.g. along direction 808 and in the lateral direction. Synergistically, when a force is applied on the mat 100 along direction 808, e.g. during driving or braking, the angle of inclination A of the hook segments 145 may cause the mounting portions 140 to be pushed outwards in the lateral direction, such that the distal edge 148 is pressed more firmly into engagement with the internal structure of the door sill 60, thereby strengthening the anchoring of the mat 100 to the door sill 60.

As further shown in FIG 5, in plane of the mat 100, the hook segments 145 can comprise an outer contour having a contour width W along the bottom edge 65 of the door sill 60 matching a cutout width of a cutout 66 in the door sill 60. The cutout 66 can for example be a slot or groove in the bottom edge 65 of the door sill, having a predefined cutout width, while the hook segment comprises an outer contour, that matches, in plane of the mat 100, the shape of the cutout, and that has a contour width approximately equal to the predefined cutout width, e.g. within 10%, preferably within 5%. Accordingly, in use, the outer contour of the hook segment 145 engages with the cutout 66, e.g. to prevent the mat from sliding along the driving direction 808. To provide a snap-lock connection with the cutout 66 in the door sill 60, each mounting portion 140 may comprise a connector. For example, each mounting portion 140 can comprise a connector by having a slit or cutout oriented perpendicular to direction 808, e.g. at least partially splitting the hook segment 145, providing the mounting portion 140 with an integral biasing element as a result of elastic properties of the thus formed mounting portion 140. Alternatively, the mounting portion 140 can be provided with additional components to form a connector, such as leaf springs, or the mounting portion 140 can comprise a connector e.g. arranged for creating a press fit with a cutout 66.

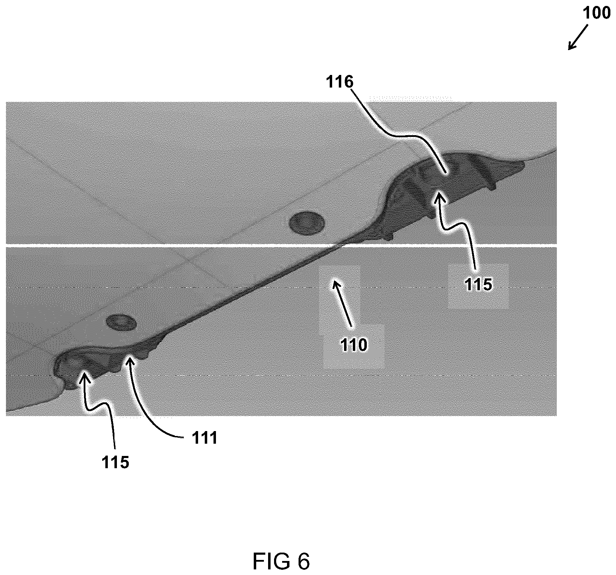

FIG 6 provides a bottom view of a rear section 110 of the mat 100. The rear section 110 comprises a bottom surface 111 provided with at least two pockets 115 and are arranged for fixating the rear section 110 to protrusions extending from the cabin floor. By having fixation means provided on the bottom surface 111, the top surface of the mat 100 can remain free of irregularities, e.g. formed by fasteners, hooks, or holes, which may otherwise change or reduce the flow of fluid to the lowest level beyond the door sill, and to the gutter, as described herein. The pockets 115 can e.g. have an elliptical shape, as shown, or a cylindrical, rectangular or any other geometrical shape, depending on the shape of the protrusions on the cabin floor. As such, the rear section 110 can cover the protrusions on the cabin floor. The protrusions can e.g. be used to fixate the mat 100 to the cabin floor, without using additional fasteners, by having each pocket 115 comprise an elastically deformable internal wall surface 116, for forming a press-fit around the external wall surface of a respective protrusion. For example, the pockets 115 can be made of a material with a relatively low stiffness, such as a polymer material (e.g. a rubber or nylon). Alternatively, or additionally, the pocket 115 can comprise an internal wall surface 116 that is compliant in a direction outward from the protrusion, e.g. by having a relatively thin wall thickness, or by having one or more vertical slits to form integral biasing elements arranged for providing compliance in the described direction. As such, the top surface of the mat 100 can be a continuous surface, e.g. free of any recesses, holes, protrusions or other irregularities that may stagnate, interrupt or alter the flow of fluid to the described lowest level beyond the door sill.

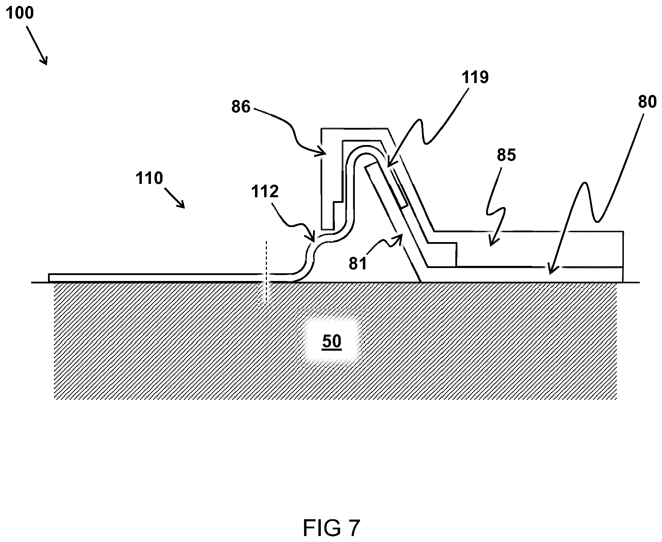

FIG 7 illustrates a side view of other or further embodiments of the rear section 110. The rear section 110 can comprise a flap 119 extending from a rear portion 112 of the rear section 110 and extendible over an upstanding front wall 81 of a frame portion 80. The frame portion 80 can for example be mounted to the cabin floor 50 to provide a mounting frame for a seat of the truck. As a result, the mat 100 covers an area of the cabin floor 50 spanning from the seat to the door sill of the vehicle, to drain any water or other fluid collected from the driver's or passenger's coat or boots. Optionally, the frame portion 80 can e.g. form a storage compartment below a seat, which can be covered by a cover 85, comprising a cover flap 86 extending from a front portion of the cover 85 and extendible over the upstanding wall 81 of the frame portion 80 including the flap 119 or the rear section 110 of the mat 100. As such, an improved fixation between the mat 100 and the cabin floor 50 can be provided.

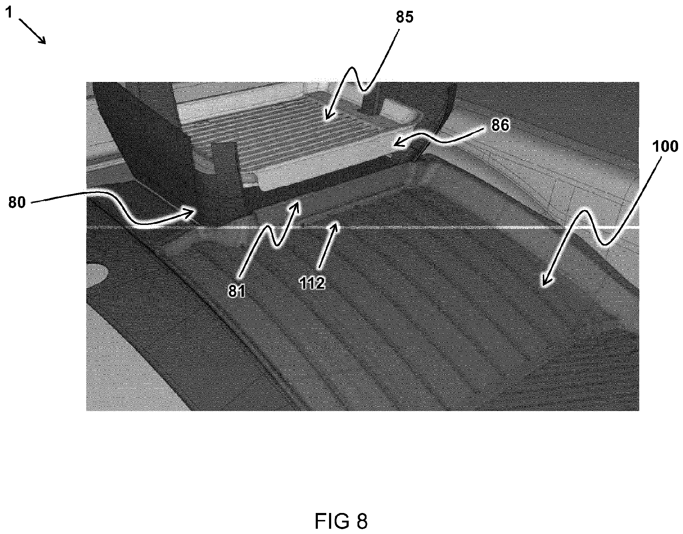

FIG 8 provides an isometric view of an example cabin of a vehicle, e.g. a truck 1, comprising the mat 100 as described herein. The truck 1 further comprises a frame portion 80 and a cover 85. The frame portion 80 can e.g. be arranged to form a storage compartment below a seat of the truck. The cover 85 can for example be arranged for covering the frame portion 80 e.g. to provide a non-slip inner surface of the storage compartment. In FIG 8, the cover 85 is illustrated at an offset above the frame portion 80, to indicate that the cover 85 can be configured to clamp the mat 100 when extending over an upstanding front wall 81 of the frame portion 80, e.g. by the cover flap 86 extending over the rear portion 112 of the mat 100. Accordingly, the mat 100 can be fixated to the cabin floor by being clamped between the frame portion 80 and the cover 85. This may render obsolete the described fixation of the rear section of the mat 100 to protrusions extending from the cabin floor, e.g. by the pockets 115 shown in FIG 6. Alternatively, the mat 100 can be fixated to the cabin floor by both types of fixation arrangements.

It is thus believed that the operation and construction of the present invention will be apparent from the foregoing description and drawings appended thereto. For the purpose of clarity and a concise description features are described herein as part of the same or separate embodiments, however, it will be appreciated that the scope of the invention may include embodiments having combinations of all or some of the features described.

The invention applies not only to automotive applications where the mat is used for covering a cabin floor of a truck or other type of vehicle, but also to other technical or industrial applications where a mat is used. It will be clear to the skilled person that the invention is not limited to any embodiment herein described and that modifications are possible as long as remaining within the scope of the appended claims.

## Claims

1. A mat (100) for covering a cabin floor (50) of a truck, comprising:
- a rear section (110), arranged for fixating the mat to the cabin floor (50);
- a side section (120), arranged for extending along a door sill (60) of the truck;
wherein the side section (120) comprises a side wall (130) having at least two mounting portions (140);
wherein each mounting portion (140) of the at least two mounting portions extends laterally for engaging with a bottom edge (65) of the door sill, to fixate the side wall (130) between the cabin floor (50) and the door sill;
wherein, when installed in the truck, the side section (120) provides the mat with a declining top surface (200) having a lowest level beyond the door sill (60), for thereby forming a funnel that can drain away fluid from areas of the cabin directly to a gutter below the door sill.

2. The mat (100) according to claim 1, wherein each mounting portion (140) of the at least two mounting portions comprises a hook segment (145), arranged for hooking the mat to the bottom edge (65) of the door sill.

3. The mat (100) according to any preceding claim, wherein the hook segment (65) has a top surface (146) provided with a recess (147) for engaging with the bottom edge (65) of the door sill.

4. The mat (100) according to any preceding claim, wherein, in plane of the mat, the hook segment (145) extends substantially at an angle (A) to the driving direction (808) of the truck, wherein the angle (A) ranges between 30 - 60 degrees.

5. The mat (100) according to any preceding claim, wherein the hook segment (145) comprises a distal edge (148), arranged for engaging with an internal structure of the door sill.

6. The mat (100) according to any preceding claim, wherein, in plane of the mat, the hook segment (145) comprises an outer contour having a contour width (W) along the bottom edge (65) of the door sill matching a cutout width of a cutout (66) in the door sill.

7. The mat (100) according to any preceding claim, wherein each mounting portion (140) of the at least two mounting portions comprises a connector for providing a snap-lock connection with a cutout (66) in the door sill.

8. The mat (100) according to any preceding claim, wherein the rear section (110) comprises a bottom surface (111) provided with at least two pockets (115), arranged for fixating the rear section (110) to protrusions extending from the cabin floor (50).

9. The mat (100) according to claim 8, wherein each pocket (115) of the at least two pockets comprises an elastically deformable internal wall surface (116), for forming a press-fit around an external wall surface of a respective protrusion.

10. The mat (100) according to any preceding claim, wherein the rear section (110) comprises a flap (119) extending from a rear portion (112) of the rear section and extendible over an upstanding front wall (81) of a frame portion (80).

11. The mat according to any preceding claim, wherein the mat comprises a top surface provided with an anti-slip coating.

12. The mat according to claim 11, wherein the top surface is further provided with grooves extending towards the side section, for directing the fluid to be drained towards and beyond the bottom edge of the door sill.

13. The mat (100) according to any preceding claim, wherein at least the side section (120) is made of a polymer material.

14. The mat (100) according to any preceding claim, wherein at least the side section (120) is an injection moulded part.

15. A truck (1), comprising the mat (100) according to any preceding claim.

16. The truck (1) according to claim 15 when combined with claim 10, the truck further comprising:
- a frame portion (80); and
- a cover (85), arranged for covering the frame portion (80);
wherein the cover (85) is configured to clamp the mat (100) when extending over an upstanding front wall (81) of the frame portion.

## Patentansprüche

1. Matte (100) zum Abdecken eines Kabinenbodens (50) eines Lastkraftwagens, die Folgendes umfasst:
- einen hinteren Abschnitt (110), der zum Fixieren der Matte an dem Kabinenboden (50) eingerichtet ist;
- einen Seitenabschnitt (120), der dazu eingerichtet ist, sich entlang einer Türschwelle (60) des Lastkraftwagens zu erstrecken;
wobei der Seitenabschnitt (120) eine Seitenwand (130) umfasst, die mindestens zwei Montageabschnitte (140) aufweist;
wobei sich jeder Montageabschnitt (140) der mindestens zwei Montageabschnitte seitlich zum Eingreifen mit einer Unterkante (65) der Türschwelle erstreckt, um die Seitenwand (130) zwischen dem Kabinenboden (50) und der Türschwelle zu fixieren;
wenn er in dem Lastkraftwagen installiert ist, der Seitenabschnitt (120) der Matte eine abfallende Oberfläche (200) bereitstellt, die ein niedrigstes Niveau hinter der Türschwelle (60) aufweist, um dadurch einen Trichter zu bilden, der Fluid aus Bereichen der Kabine weg direkt zu einer Rinne unter der Türschwelle ableiten kann.

2. Matte (100) nach Anspruch 1, wobei jeder Montageabschnitt (140) der mindestens zwei Montageabschnitte ein Hakensegment (145) umfasst, das zum Einhaken der Matte an der Unterkante (65) der Türschwelle eingerichtet ist.

3. Matte (100) nach einem vorstehenden Anspruch, wobei das Hakensegment (65) eine obere Oberfläche (146) aufweist, die mit einer Aussparung (147) zum Eingreifen mit der Unterkante (65) der Türschwelle versehen ist.

4. Matte (100) nach einem vorstehenden Anspruch, wobei sich das Hakensegment (145) in der Ebene der Matte im Wesentlichen mit einem Winkel (A) zu der Fahrtrichtung (808) des Lastkraftwagens erstreckt, wobei der Winkel (A) 30 - 60 Grad beträgt.

5. Matte (100) nach einem vorstehenden Anspruch, wobei das Hakensegment (145) eine distale Kante (148) aufweist, die zum Eingreifen mit einer Innenstruktur der Türschwelle eingerichtet ist.

6. Matte (100) nach einem vorstehenden Anspruch, wobei das Hakensegment (145) in der Ebene der Matte eine Außenkontur umfasst, die eine Konturbreite (W) entlang der Unterkante (65) der Türschwelle aufweist, die mit einer Ausschnittbreite eines Ausschnitts (66) in der Türschwelle übereinstimmt.

7. Matte (100) nach einem vorstehenden Anspruch, wobei jeder Montageabschnitt (140) der mindestens zwei Montageabschnitte einen Verbinder zum Bereitstellen einer Schnappverriegelungsverbindung mit einem Ausschnitt (66) in der Türschwelle umfasst.

8. Matte (100) nach einem vorstehenden Anspruch, wobei der hintere Abschnitt (110) eine untere Oberfläche (111) umfasst, die mit mindestens zwei Taschen (115) versehen ist, die zum Befestigen des hinteren Abschnitts (110) an Vorsprüngen, die sich von dem Kabinenboden (50) aus erstrecken, eingerichtet sind.

9. Matte (100) nach Anspruch 8, wobei jede Tasche (115) der mindestens zwei Taschen eine elastisch verformbare Innenwandoberfläche (116) zum Bilden einer Presspassung um eine Außenwandoberfläche eines jeweiligen Vorsprungs umfasst.

10. Matte (100) nach einem vorstehenden Anspruch, wobei der hintere Abschnitt (110) eine Klappe (119) umfasst, die sich von einem hinteren Teil (112) des hinteren Abschnitts erstreckt und über eine hochragende Vorderwand (81) eines Rahmenabschnitts (80) ausziehbar ist.

11. Matte nach einem vorstehenden Anspruch, wobei die Matte eine obere Oberfläche, die mit einer rutschfesten Beschichtung versehen ist, umfasst.

12. Matte nach Anspruch 11, wobei die obere Oberfläche ferner mit Rillen versehen ist, die sich in Richtung des Seitenabschnitts erstrecken, um das Fluid zum Ableiten in Richtung der Unterkante der Türschwelle und darüber hinaus zu lenken.

13. Matte (100) nach einem vorstehenden Anspruch, wobei mindestens der Seitenabschnitt (120) aus einem Polymermaterial hergestellt ist.

14. Matte (100) nach einem vorstehenden Anspruch, wobei mindestens der Seitenabschnitt (120) ein Spritzgießteil ist.

15. Lastkraftwagen (1), der die Matte (100) nach einem vorstehenden Anspruch umfasst.

16. Lastkraftwagen (1) nach Anspruch 15, wenn kombiniert mit Anspruch 10, wobei der Lastkraftwagen weiter Folgendes umfasst:
- einen Rahmenabschnitt (80); und
- eine Abdeckung (85), die zum Abdecken des Rahmenabschnitts (80) eingerichtet ist; wobei die Abdeckung (85) dazu konfiguriert ist, die Matte (100) einzuklemmen, wenn sie sich über eine aufragende Vorderwand (81) des Rahmenabschnitts erstreckt.

## Revendications

1. Tapis (100) destiné à recouvrir le sol de la cabine (50) d'un camion, comprenant :
- une section arrière (110), prévue pour fixer le tapis sur le sol de la cabine (50) ;
- une section latérale (120), prévue pour s'étendre le long d'un seuil de portière (60) du camion ;
dans lequel la section latérale (120) comprend une paroi latérale (130) ayant au moins deux parties de montage (140) ;
dans lequel chaque partie de montage (140) des au moins deux parties de montage s'étend latéralement afin de s'engager avec un bord inférieur (65) du seuil de portière, afin de fixer la paroi latérale (130) entre le sol de la cabine (50) et le seuil de portière ;
dans lequel, lorsqu'elle est installée dans le camion, la section latérale (120) confère au tapis une surface supérieure en déclin (200) ayant un niveau le plus bas au-delà du seuil de portière (60), afin de former ainsi un entonnoir qui peut évacuer le liquide des zones de la cabine directement vers une gouttière située sous le seuil de portière.

2. Tapis (100) selon la revendication 1, dans lequel chaque partie de montage (140) des au moins deux parties de montage comprend un segment à crochet (145), prévu pour accrocher le tapis sur le bord inférieur (65) du seuil de portière.

3. Tapis (100) selon l'une quelconque des revendications précédentes, dans lequel le segment à crochet (65) possède une surface supérieure (146) munie d'un renfoncement (147) destiné à s'engager avec le bord inférieur (65) du seuil de portière.

4. Tapis (100) selon l'une quelconque des revendications précédentes, dans lequel, sur le même plan que le tapis, le segment à crochet (145) s'étend sensiblement à un angle (A) par rapport au sens de déplacement (808) du camion, dans lequel l'angle (A) est compris entre 30 et 60 degrés.

5. Tapis (100) selon l'une quelconque des revendications précédentes, dans lequel le segment à crochet (145) comprend un bord distal (148), prévu pour s'engager avec une structure interne du seuil de portière.

6. Tapis (100) selon l'une quelconque des revendications précédentes, dans lequel, sur le même plan que le tapis, le segment à crochet (145) comprend un contour externe ayant une largeur de contour (W) le long du bord inférieur (65) du seuil de portière qui correspond à une largeur de découpe d'une découpe (66) dans le seuil de portière.

7. Tapis (100) selon l'une quelconque des revendications précédentes, dans lequel chaque partie de montage (140) des au moins deux parties de montage comprend un raccord destiné à assurer un raccordement par encliquetage avec une découpe (66) dans le seuil de portière.

8. Tapis (100) selon l'une quelconque des revendications précédentes, dans lequel la section arrière (110) comprend une surface inférieure (111) munie d'au moins deux poches (115), prévues pour fixer la section arrière (110) sur des saillies qui s'étendent depuis le sol de la cabine (50).

9. Tapis (100) selon la revendication 8, dans lequel chaque poche (115) des au moins deux poches comprend une surface de paroi interne élastiquement déformable (116), destinée à former un emmanchement à force autour d'une surface de paroi externe d'une saillie respective.

10. Tapis (100) selon l'une quelconque des revendications précédentes, dans lequel la section arrière (110) comprend un volet (119) qui s'étend depuis une partie arrière (112) de la section arrière et qui peut s'étendre sur une paroi avant verticale (81) d'une partie de châssis (80).

11. Tapis selon l'une quelconque des revendications précédentes, dans lequel le tapis comprend une surface supérieure munie d'un revêtement antidérapant.

12. Tapis selon la revendication 11, dans lequel la surface supérieure est en outre munie de rainures qui s'étendent vers la section latérale, afin de diriger le liquide à évacuer vers et au-delà du bord inférieur du seuil de portière.

13. Tapis (100) selon l'une quelconque des revendications précédentes, dans lequel au moins la section latérale (120) est composée d'un matériau polymère.

14. Tapis (100) selon l'une quelconque des revendications précédentes, dans lequel au moins la section latérale (120) est une pièce moulée par injection.

15. Camion (1), comprenant le tapis (100) selon l'une quelconque des revendications précédentes.

16. Camion (1) selon la revendication 15 lorsqu'elle est combinée à la revendication 10, le camion comprenant en outre :
- une partie de châssis (80) ; et
- un capot (85), prévu pour recouvrir la partie de châssis (80) ;
dans lequel le capot (85) est configuré pour fixer le tapis (100) lorsqu'il s'étend sur une paroi avant verticale (81) de la partie de châssis.
